(19) Europäisches Patentamt
European Patent Office
Office européen des brevets

(11) **EP 3 257 168 B1**

(12) **EUROPEAN PATENT SPECIFICATION**

(45) Date of publication and mention
of the grant of the patent:
**24.10.2018 Bulletin 2018/43**

(21) Application number: **16704565.7**

(22) Date of filing: **09.02.2016**

(51) Int Cl.:
*H04B 7/185* (2006.01)     *H01Q 1/28* (2006.01)

(86) International application number:
**PCT/EP2016/052681**

(87) International publication number:
**WO 2016/128373 (18.08.2016 Gazette 2016/33)**

(54) **METHOD FOR CREATING A CONSTELLATION OF ELECTRONIC DEVICES FOR PROVIDING OPTICAL OR RADIO-FREQUENCY OPERATIONS ON A PREDETERMINED GEOGRAPHICAL AREA, AND A SYSTEM OF SUCH A CONSTELLATION OF ELECTRONIC DEVICES**

VERFAHREN ZUR ERZEUGUNG EINER KONSTELLATION VON ELEKTRONISCHEN GERÄTEN ZUR BEREITSTELLUNG VON OPTISCHEN ODER FUNKFREQUENZVERBINDUNGEN IN EINEM VORBESTIMMTEN GEOGRAFISCHEN GEBIET, UND SYSTEM MIT EINER SOLCHEN KONSTELLATION VON ELEKTRONISCHEN GERÄTEN

PROCÉDÉ DE CRÉATION D'UNE CONSTELLATION DE DISPOSITIFS ÉLECTRONIQUES OU OPTIQUES POUR FOURNIR DES OPÉRATIONS OPTIQUES OU DE RADIOFRÉQUENCE SUR UNE ZONE GÉOGRAPHIQUE PRÉDÉTERMINÉE, ET UN SYSTÈME D'UNE TELLE CONSTELLATION DE DISPOSITIFS ÉLECTRONIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2015 EP 15154371**

(43) Date of publication of application:
**20.12.2017 Bulletin 2017/51**

(73) Proprietor: **European Space Agency (ESA)**
**75738 Paris Cedex 15 (FR)**

(72) Inventor: **RAMMOS, Emmanuel**
**2511 VW Den Haag (NL)**

(74) Representative: **Nederlandsch Octrooibureau**
**P.O. Box 29720**
**2502 LS The Hague (NL)**

(56) References cited:
**US-A1- 2004 198 346     US-A1- 2009 221 285**
**US-A1- 2010 045 544     US-A1- 2014 159 949**
**US-A1- 2014 166 817     US-B1- 6 285 878**

## Description

Field of the invention

The present invention relates to a method for creating a constellation of electronic devices for providing optical or radio-frequency operations relating to earth surface data collection applications on a predetermined geographical area. Also, the invention relates to a class of electronic devices and a system of such a constellation of electronic devices.

Prior art

There has been considerable interest and work recently on small satellites with mass as low as 1 up to 50 kg. Several 'small' satellites (Nanosats, Cubesats, Microsats - hereafter called Smallsats) and constellations of them have been proposed / developed.

Various companies offer solutions based for instance on the Cubesat standard. A Cubesat is a nano-satellite whose design is compliant with the CubeSat standard and whose volume is a multiple of a single CubeSat unit (10x10x10 cm$^3$, <1.33 kg) ranging from 2 units up to 6 units. A 3U small satellite (composed by 3 standard Cubesat units) may deliver up to 25W power and accommodate about 3kg payload.

Constellations based on Smallsats and related technology have been developed by several actors. For example, an Iridium/Orbcomm modem from AAC Microtec has been developed and is flying on TechEdSat. UHF-based Inter-Satellite Links have been developed by GomSpace for the ArduSat-1 mission in order to allow communications between two CubeSats using their CubeSat Space Protocol.

Such developments lead to the wide availability of more and more small, reliable and low cost payloads for communications and earth observation (EO) applications. Several Radio Frequency (RF) payloads have been developed, qualified and integrated into CubeSat platforms as well as optical payloads for EO applications. Additionally, VHF/UHF/S-Band payloads have been developed. The possibility of use of L-Band regulated frequencies for air-to-ground communications (using e.g. Inmarsat or Thuraya technology) or even use of mobile GSM technology / frequencies is considered.

The commercial interest in Smallsats and constellations thereof is inter alia based on a range of potential applications including, in the telecommunications field, regular data communication services (e.g. as demonstrated by TACSAT-4, store and forward), M2M (machine-to-machine) communications (e.g. alike Orbcomm, AprizeSat), services which are based on "receive-only" satellite communications (e.g. satellite-ADS-B) or services which are based on "transmit-only" communications (e.g. a data dissemination/broadcast service, satellite-AIS in general, VHF Data Exchange Systems (VDES)). Also a range of EO applications may be considered, and there are several firms building constellations of earth observation satellites. For example, Satellogic envisions launching a constellation of 300 satellites, each weighing approximately 25 kilograms, to provide global earth imagery, Planet Labs Inc. and Spire, both of San Francisco, as well as Dauria Aerospace, with headquarters in Munich, also have announced plans to sell imagery captured by earth-orbiting spacecraft.

In addition, a combination of Cubesats with GEO (Geosynchronous Earth Orbiting) links are investigated.

The cost of a Cubesat in orbit is approximately composed by 1/3 each from the platform, payload and launch cost. A key issue is the launch cost. Smallsats are typically launched as secondary or piggyback payloads on classical launchers. Basically commercial launch cost is a function of the mass of the satellite and the desired earth orbit.

For example the launch cost of a low earth orbit Cubesat varies from about $250.000,-- for a 5kg weight to about $1.000.000,-- for a 20kg weight. Higher orbit applications will cost even more.

In addition, the availability of launch opportunity is an issue for large constellations, i.e., a large number of satellites that cooperate in the constellation.

The launch cost and availability issues, incited developers to look for alternative platforms such as high altitude UAV's (Unmanned Aerial Vehicles) or stratospheric balloons. Several issues are raised for such systems.

For UAV's effort must be taken to design, manufacture a fleet of such UAVs, and design an operational set-up for such UAVs.

Moreover, flight of UAV's needs to be controlled from the ground by the operators of the UAV's, therefore each UAV needs to be in sight of a control ground station and this makes the system even more expensive to operate in addition to its design and building. In addition, it is noted that use of UAVs in most countries is not regulated and forbidden.

American patent US-B-8,897,770 discloses a communication system using a ground station and multiple UAV's for implementing an airborne wireless communication system using air-to-ground and air-to-air links.

Also for stratospheric balloons, regulatory and in addition operational issues exist in relation to the control of orbits of such balloons, in particular within the stratospheric air streams that are considered for their operations.

Furthermore, Smallsats have to be compatible with space environment, which makes design/testing/manufacturing correspondingly costly. The platform supporting the payload makes the bulk of the satellite mass (more than 2/3's). For example, when 3-axis attitude stabilisation and pointing is required on a satellite, the attitude and orbit control subsystem (AOCS) itself usually occupies 1 unit of a triple CubeSat. Power generation and thermal control are also key elements for mass.

Considering cost issues, a trade-off is typically made between reliability and lifetime of Smallsats. Typically, Smallsats lifetime is some months or years, making necessary a regular fleet replenishment for commercial systems. Also, the large number of satellites in Smallsats LEO constellations and lack of clear de-orbit policies for Smallsats at end-of-lifetime, is an issue for space debris.

International patent publication WO2009/060139 discloses a system for earth observation using a space layer, ground layer and telecommunications layer. The space layer comprises multiple satellites equipped with image acquisition devices.

It is noted that prior art publications exist relating to setting up telecommunications networks using aircraft: American patent US-A-6,285,878 discloses a broadband wireless communication system provided by commercial airlines, each aircraft serving as a relay station node in a wireless communication system using microwave relay station equipment. Passengers on-board the aircraft and users within line-of-sight of the aircraft can access the wireless communication system using a gateway function of the equipment.

American patent publication US2004/0198346 discloses an aircraft based cellular system. Aircraft are equipped with on-board equipment supporting wireless communication with dual mode handsets, and for exchanging wireless communication traffic and control information with one or more ground based stations. A control center manages the communications and control data in the entire system.

American patent publication US2009/0221285 discloses a communication system wherein a mobile communication device is used for relaying transmitted signals in a wireless communication network. The mobile communication device operates at an altitude range between 1,000 and 65,000 feet (typical used by aircraft).

Summary of the invention

The invention is defined in the appended claims. The present invention intends to provide a flexible and versatile system and method obtaining data relating to a certain geographical area, which is easier to implement and more flexible to operate than current satellite based systems.

According to a first aspect of the present invention, a method is provided of creating a constellation of electronic devices for providing optical or radio-frequency operations relating to earth surface data collection applications on a predetermined geographical area, comprising:

- providing on each of a plurality of airplanes at least one electronic device from the constellation, the at least one electronic device being a unit attached to the associated airplane and comprising a data collection sensor, during its flight each airplane having a flight path over at least a portion of said predetermined geographical area, each electronic device being configured for said operations during the flight with an earth coverage range for said operations determined by an individual airplane coverage range of a portion of the earth surface as provided by the associated airplane;

- activating one or more electronic devices for said operations when the individual airplane coverage of the one or more airplanes associated with the one or more electronic devices is within the predetermined geographical area.

When the airplane is a commercial passenger airplane or a commercial cargo airplane operating in accordance with its flight path and schedule the intended earth coverage can be obtained without having to use dedicated airborne platforms, such as satellites or UAV's.

The optical or radio-frequency operations relating to earth surface data collection applications may comprise earth observation applications and/or automated identification system (AIS) applications, in either passive or active modes of operation.

The individual coverage range of an airplane (individual airplane coverage) is defined as the geographical area below the airplane that is visible from the airplane (up to the airplane 'horizon'). Assuming a perfectly spherical earth the individual airplane coverage would be a circle centered at the airplane's sub-flight point and moving with the airplane along the flight path. The circle shape is an approximation, as it is not taking into account the presence of mountains, valleys, etc. on the earth surface.

The individual airplane coverage determines the maximum range for line-of-sight operations performed by the electronic device onboard the airplane (although under circumstances RF operations may extend even further).

Given the fact that the cruise flight altitude of airplanes is very small as compared to the earth radius (6,371km), the radius of the individual airplane coverage on the surface of the earth and the maximum range for line-of-sight operations are practically equal.

In practice operations need to take into account parameters such as atmospheric propagation of the signals, which depend on the frequencies or the wavelengths used, or minimum elevation angle of the ground stations. The RF signals are affected by the refractive effects of atmospheric layers and the propagation paths may be somewhat curved, and this effect for normal weather conditions increases the range by about 15%. On the other hand increasing the user terminal minimum elevation reduces the range. These effects shall be taken into account for the detailed design and operations of the constellation.

By the activation of individual electronic devices within the predetermined geographical area on a fleet of airplanes, a constellation coverage is established that is the aggregate of the individual coverage ranges of the activated electronic devices.

The constellation coverage may fully or partially cover the predetermined geographical area as such coverage depends on the positions of the airplanes, the individual airplane coverages may be partially overlapping or not, may have intermediate gaps or not.

Since the airplanes travel along their respective flight paths, the individual coverage ranges are moving correspondingly. Therefore, the constellation coverage is dynamically changing with the position of the individual coverage ranges. In addition, an airplane may leave or enter the predetermined geographical area at a given instance, which may affect the degree of coverage of the predetermined geographical area by the constellation.

The activation of the individual electronic devices can be done by means of a controlling system that is configured to obtain information on the positions of the individual electronic devices and to decide which electronic devices are activated to provide individual coverage in such a way that the constellation substantially covers the predetermined geographical area.

In a further aspect of the present invention, an electronic device is provided for providing optical or radio-frequency operations on a predetermined geographical area of at least a portion of the earth surface, the electronic device being a unit attachable to an associated airplane and comprising a data collection sensor, the electronic device further comprising a radome assembly with a radome mounted to a radome base, the radome base being attachable to the associated airplane. The constructional features allow easy placement on any airplane as desired, providing a flexible and scalable use of the electronic devices. In another embodiment the electronic device may be mounted partially or completely inside the plane (below the external surface of the plane) in order to minimize drag.

In an even further aspect, the present invention relates to a system of a constellation of electronic devices according to the present invention embodiments, for providing optical or radio-frequency operations relating to earth surface data collection applications on a predetermined geographical area of at least a portion of the earth surface, the system being arranged to execute the present invention method embodiments.

According to an embodiment, the system further comprising a control station, and the electronic device comprises a communications unit arranged to provide exchange of control data with the control station. I.e. the control station is arranged to control activation of one or more electronic devices for said operations when the individual airplane coverage of the one or more airplanes associated with the one or more electronic devices is within the predetermined geographical area.

According to an embodiment, the control station is arranged to take into account the connectivity or EO requirements of the users present within the predetermined geographical area, when controlling the activation of the electronic devices.

According to a further embodiment, the invention provides a control station as described above, wherein the control station controls the activation of each electronic device of the constellation by deriving for each respective electronic device its position in said geographical area and by coordinating the activation in such a way that the earth coverage ranges for said operations of the activated electronic devices substantially cover the predetermined geographical area for a predetermined duration of time.

In an embodiment, the position of each electronic device may be determined by a GPS, or an equivalent navigation receiver, making part of the device or by navigation data that may be provided to the electronic device by the airplane or both. Furthermore, the control station may be further arranged for executing a handover of the operations performed by one electronic device to a further electronic device when the earth coverage range of said one electronic device is moving out of the predetermined geographical area and the earth coverage range of said further electronic device is within the predetermined geographical area.

The activation of one or more of the electronic devices may be based on optimizing or maximizing coverage of the predetermined geographical area for a maximized time, based on the earth coverage range of individual electronic devices, hence providing for an efficient as possible operation. To make even further advantageous use of the present invention embodiments, the coverage of the predetermined geographical area may be estimated from a predetermined timing schedule of flight and flight path for each of the associated airplanes.

Due to the relatively high density of commercial airplane traffic over many geographic areas, it is possible to provide a plurality of commercial airplanes each with one or more electronic devices with Smallsat-like properties and to create a large constellation coverage area that is virtually covered by the electronic devices that are in flight and distributed over that area in accordance with their respective individual airplane coverage.

In order to avoid the need to design, build and operate dedicated airplanes, the invention embodiments may use existing commercial airplanes.

Since no launching of satellites with similar capabilities into space is required, costs can be reduced significantly. The cost for launching is reduced to the costs of transportation of the device by the airplane. In fact the airplanes play the role of the platform carrying the payloads. Additionally, this aspect of the invention has an advantage that no space debris is generated.

Also, the operations of the commercial airplanes are fully regulated and are performed by the aviation companies and this reduces considerably the operations of the constellation as the operator of the constellation needs only to operate the electronic devices.

Moreover, since the electronic device according to the invention remains relatively close to earth within altitudes used by airplanes, no protection of the electronic device against space environment is needed. This also saves costs.

Also, as the distance to the earth surface is smaller than the distance from space, optical or RF (radar) instruments resolution is consequently improved.

Furthermore, since the altitudes at which the electronic device is operating are less than during operation in space, the relative attenuation of signals due to distance between the electronic device and an earth based user terminal or ground station is also less. As a result, lower gain antennas may be used in comparison to space operated satellite devices, providing equivalent or better link budget performance (note also that power on a plane is not a major issue and EIRP can be further improved). For example, instead of using a pointing horn (with about 20 - 23dbi gain) or even a higher gain reflector or array antenna, requiring pointing mechanisms and / or electronic, a hemispherical coverage blade or patch antenna (with about 0 to 3dbi gain) may be considered, resulting in a major simplification of the (electronic part of the) payload.

The user terminal or ground station may also have a simpler set-up with relatively reduced costs.

Another advantage of the constellation resulting from the reduced distance between the electronic device and an earth based user terminal or ground station is the lower transmission latency, which is lower than any space based system.

A further advantage is a lower Doppler shift, as the relative speed of airplanes to the ground or between airplanes is smaller than the relative speed of satellite to ground or between satellites.

In practice, commercial airplanes have a cruise flight altitude of typically about 10 km. At this altitude the airplane has an individual airplane coverage covering a circle of about 350 km radius on the earth below. As the individual airplane coverage determines the maximum range for line-of-sight operations performed by the electronic device onboard the airplane, the electronic device is capable to observe objects or to connect wirelessly to an earth based user terminal within substantially a radial distance of up to about 350 km. As a result two user terminals at earth surface level in communicative connection via the electronic device (when acting as a router device) could be spaced apart by up to about 700 km. Moreover, in case the electronic devices on airplanes are configured for inter-plane communications, an inter-plane communication link between two airplanes can be established over a similar distance of up to about 700 km.

Advantageous embodiments are further defined by the dependent claims.

Brief description of the drawings

The invention will be explained in more detail below with reference to drawings in which illustrative non-limiting examples of embodiments of the invention are shown. It will be appreciated by the person skilled in the art that other alternative and equivalent embodiments of the invention can be conceived and reduced to practice without departing from the spirit of the invention. It is intended that the invention be construed as including all such alternatives and equivalents insofar as they come within the scope of the appended claims.

Figure 1 shows a snapshot of air traffic density for commercial airplanes on a weekday morning over a part of western Europe.
Figure 2 shows a schematic layout of a communications network system in accordance with an embodiment of the present invention;
Figure 3 shows a schematic layout of a network in accordance with an embodiment of the invention,
Figure 4 shows a schematic layout of an arrangement of networks in accordance with an embodiment of the invention, and
Figure 5 shows a schematic layout of an electronic device according to an embodiment of the present invention.

Detailed description of embodiments

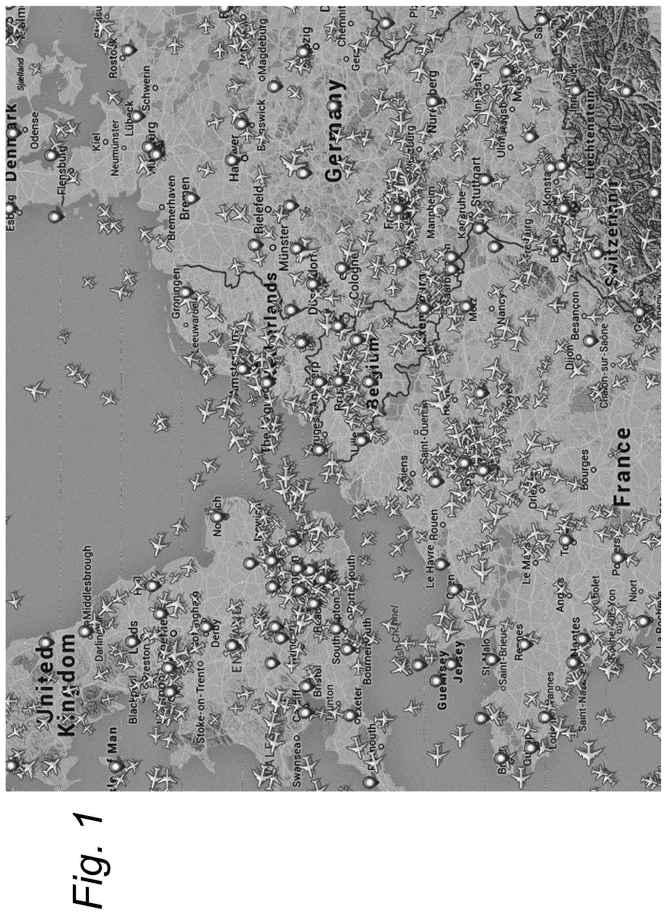

Figure 1 shows an example screen dump of a display showing air traffic density for commercial airplanes on a weekday morning over a part of western Europe.

During most time of the day, a continuous stream of commercial airplanes between various airfields can be observed. Such airplanes follow predetermined routes across western Europe based on a timing schedule of flights. Typically, due to the relatively high density of traffic, the inter-plane distance along these routes is regulated to a minimal (but still safe) distance. Similar air traffic patterns can be found in many other regions.

During flight, each airplane moves along its scheduled route at a cruising altitude of typically about 10km.

The maximum line-of-sight range or individual airplane coverage R as a function of altitude A can be estimated by equation 1:

$$R \sim \sqrt{2 \times Re \times A} \; (eq.\,1)$$

In eq. 1 Re is the earth radius (6371 km) and all values are in km.

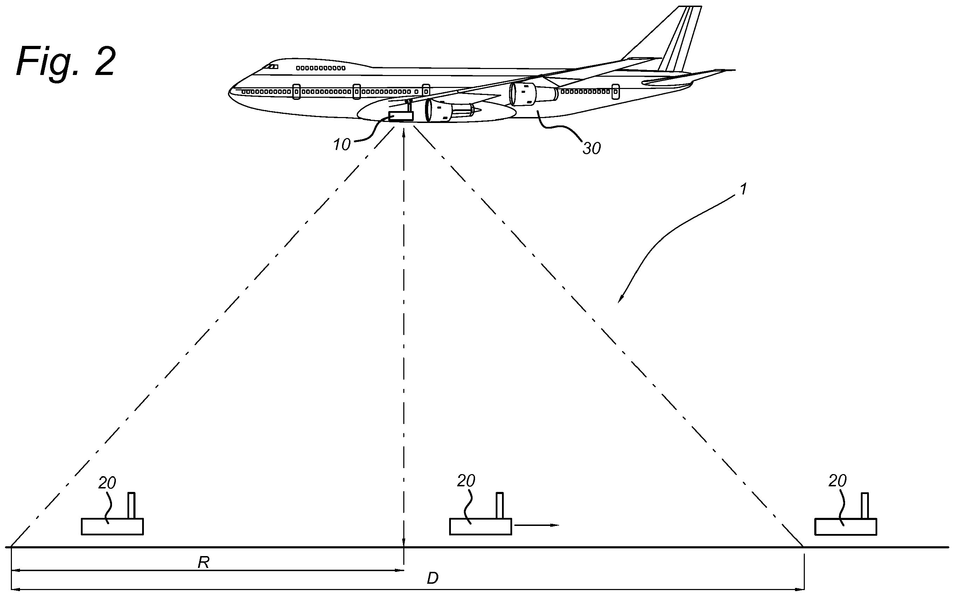

For an altitude of 10km, the individual airplane 30 coverage radius R at earth surface level is about 350 km. The coverage $D$ below the electronic device 10 is thus substantially within a circle with a diameter of about 700 km (see also the schematic view shown in Figure 2).

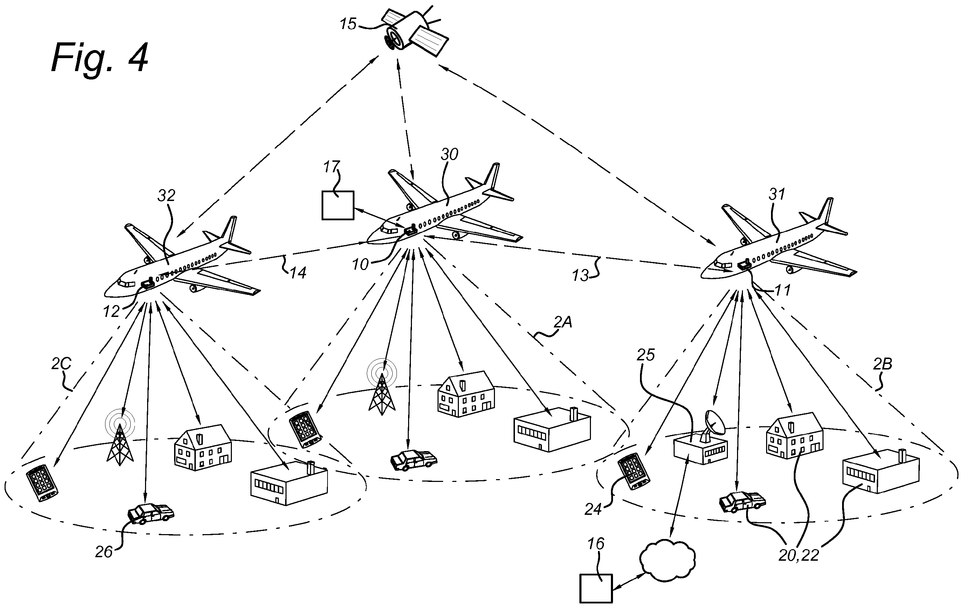

By combining the individual airplane coverage from several airplanes 30 it becomes possible to create for most of the time a continuous aggregated coverage, i.e., a constellation coverage of substantial parts of the earth surface as covered from the flight paths of the airplanes. This can be applied advantageously for for providing optical or radio-frequency operations relating to earth surface data collection applications on a predetermined geographical area. In particular over Europe and USA, areas where most of the potential users of the constellation have an interest for coverage, the individual airplane coverage for each airplane 30 is typically larger than the inter-plane distance, creating a virtually gapless coverage by overlapping individual airplanes coverages. This is shown schematically in the exemplary embodiment of Figure 4, described in further detail below, with reference to three aircraft 30-32 and their associated electronic devices 10-12. In the remainder of the description, the aircraft 30 and electronic device 10 will be designated by a single reference numeral, but depending on the constellation multiple aircraft 30-32 and/or multiple electronic devices 10-12 are actually involved.

At times when such a full and instantaneous constellation coverage is not achievable, when sufficient flights over an area are not available at the same time, there can still be full coverage when an airplane flight covers the area at an earlier or later time. For several applications of the present invention embodiments for providing optical or radio-frequency operations relating to earth surface data collection applications on a predetermined geographical area, a full instantaneous coverage is not absolutely necessary, for example for earth observation, machine-to-machine (M2M) or messaging broadcasting applications, where real time connectivity is not absolutely necessary. The constellation coverage over time of a given geographical area of interest will thus be a function of the number of airplanes 30 carrying electronic devices 10 forming the constellation and of their flight paths and schedules.

Based on this insight, a constellation of electronic devices 10 can be created by providing such electronic devices 10 on a fleet of airplanes 30 that fly above or are in visibility of the predetermined geographical area. In an embodiment, the fleet of airplanes 30 belongs to one or more commercial airlines.

Such electronic devices 10 may benefit from design experience and availability of equipment and standards from satellite constellations: satellite-payload-like electronic devices 10, simplified due to the more benign environment on an airplane 30 as compared to space environment, can thus be used to create the constellation. Applications and techniques developed for satellite constellations are applicable also in the constellation proposed in this invention. Also aerial photography or UAV techniques are applicable. In particular, e.g. for earth observation, instrumentation developed for aerial photography applications can be readily used in the constellation. Other types of optical or radio-frequency operations relating to earth surface data collection applications on a predetermined geographical area, include further earth observation applications (such as visual and/or infrared imaging, radar imaging, lidar, video recording, mapping applications, meteorology, etc.) as well as other data (or even intelligence) gathering techniques such as automated identification system (AIS) applications or other automated data collection techniques. For example, as shown schematically in Figure 2, one or more ground stations (terminals) 20, may provide AIS or other type of data, such as containers position and temperature, infrastructure status related data, or similar.

The constellation can be managed and controlled by a control unit of a provider to obtain a desired constellation coverage of the predetermined area, by controlling which electronic devices 10 will be active on which airplanes 30 that are travelling along flight paths above the predetermined geographical area according to their respective flight paths and schedules. In the schematic diagram of Figure 2, several ground stations 20 are shown, which individually, in mutual communication, or in a hierarchical configuration, may also act as the control system. Note that the ground station 20 acting as control system need not be in line-of-sight for communicating with the electronic device 10 on-board the aircraft 30, if inter-plane or satellite links are included in the constellation, as explained with reference to Figure 4..

In this sense the operation of the constellation takes into account but it is independent of the operation of the airplanes 30. The aircraft operator does not need to be involved in the operation of the constellation of the electronic devices 10. The control includes in an embodiment that a selection of electronic devices 10 to be active is based on the individual airplane coverage range of each of the active electronic devices 10. The respective individual airplane coverages in the constellation can be mapped on the predetermined area of coverage so as to obtain a maximum preferably full coverage by the constellation.

A coordination or selection of individual airplane coverages to obtain an aggregate coverage of the predetermined area can be achieved by a control system associated with the constellation that has information or collects information on the respective position of the electronic devices 10 in airplanes 30 over the predetermined area. Also, the traveling path and schedule of the airplanes 30 is taken into account to obtain a maximum constellation coverage as a function of time.

Since the electronic devices 10 are moving, the constellation coverage is dynamically changing as a function of time: airplanes 30 may leave (are no longer visible from) or enter (become visible in) the area of the constellation coverage. The control may include that a selection is made with respect to the activation of one or more of these electronic devices 10 to optimize the coverage, for maximized time of coverage, the selection taking into account the flight paths and schedules of the available airplanes in the constellation. In certain circumstances more than one electronic device 10 may be activated, e.g. to obtain earth observation data of different types, or to obtain redundant earth observation data.

Combining such data may, for example, be used for obtaining stereoscopic imaging or making interferometry.

From the flight schedule for each commercial airplane the individual coverage range by the electronic device 10 on the associated airplane may a priori be estimated and can be used to contribute to the constellation coverage in relation with applications that are based on the operations performed by the electronic devices 10 onboard the participating airplane(s) 30.

In a preferred embodiment, each electronic device 10 is coupled to, or equipped with, a GPS -or equivalent system- locator. Data from the GPS locator can be used by the electronic device 10 to communicate its position, including altitude, to the control system. In an alternative or additional embodiment the electronic device 10 may receive position data from the navigation systems of the associated airplane. In another embodiment the electronic device 10 uses both data from a GPS or equivalent locator and data from the airplane navigation system.

The operations that can be performed by the electronic devices 10 onboard the commercial airplane(s), are e.g. related to earth surface data collection applications, such as earth observations (EO) applications, but additionally may include communications and/or navigation applications.

In data gathering such as earth observation, operations in both optical and RF domains are possible at various wavelengths of the electromagnetic spectrum. Passive operations are possible that are based on capturing signals originating from the earth surface, for applications such as imaging, photography and video. Also active operations that transmit signals to the earth surface and detect a response signal from the earth surface are conceivable, for example reflected signals in radar, lidar and further radar-like operations.

The electronic device 10 with earth observation capabilities can be arranged to provide coverage of the full individual airplane coverage (wide angle observation) or parts of the individual airplane coverage (observation of one or more spots within the individual airplane coverage). Data that are collected during the data gathering, e.g. for earth observation can be stored in a memory which is part of the electronic device 10. At later time, e.g. when the airplane 30 has landed at an airport, the data can then be retrieved and/or uploaded to a predetermined location, for example via a communications link at the airport.

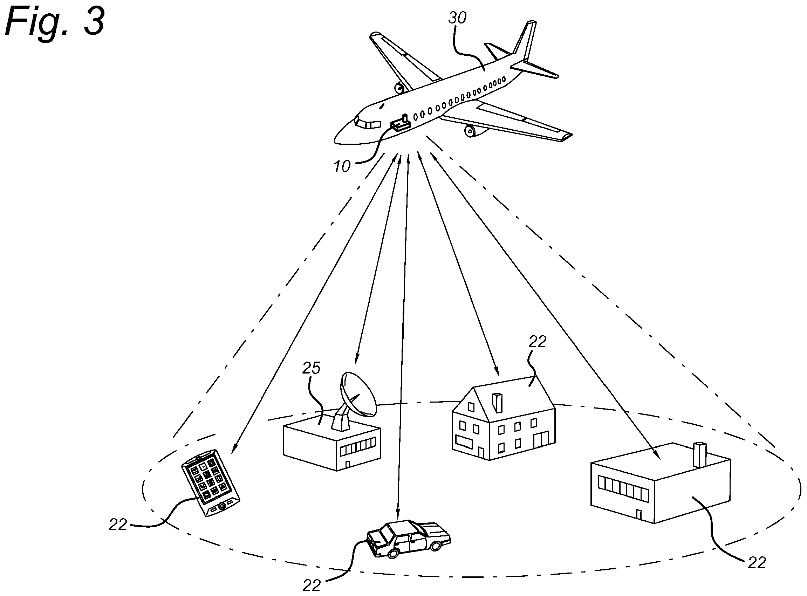

For many data gathering applications such indirect uploading of data is acceptable. However, in some data gathering applications a (near) real time transmittal of collected data can be a requirement, for example in the detection of calamities such as forest fires, volcanic activity, earthquake, tsunami, etc. In such cases, the electronic device 10 is configured to transmit the collected data via a communications link that is available within the individual airplane coverage, e.g. via a connection to a receiving ground station 25 within visibility range of the electronic device 10 (see also description of Figure 3 and 4 below). Alternatively, in particular if there is no direct visibility of a receiving ground station 25, the transmission can be done by using an inter-plane connectivity network or satellite links.

As mentioned above, since the density of commercial air traffic over many geographical areas is high, the method and system of the present invention embodiments can provide an alternative for earth observation satellite constellations, with a possibility of providing for several geographical areas of interest (such as Europe or USA) a coverage continuous in time, or more frequent relative to a constellation of satellites.

Earth observation applications may include -but are not limited to: imaging, video, mapping, measurements relating to vegetation or crops, fire detection and burned areas mapping, measurement of salinity, altimetry, aerial photography etc. Also meteorology applications are possible.

In relation to communications, applications at various RF or optical frequency bands, transmit only (Tx) or receive only (Rx) or transmit and receive (Tx/Rx) are conceivable including -but not limited to-: ad-hoc networks (for example the electronic devices on the planes are acting as routers), for voice, data, video (for example distributing videos for cashing on users devices), mobile telephony ('base station in the sky'), broadcasting (for example radio, messages, images etc.,), machine-to-machine communications, and remote data collection.

The communications applications may be configured to determine if a backbone ground station 25 for access to a network backbone (Internet) is present within the individual airplane coverage range of the electronic device 10, as a specific example of a ground station 20 shown in Figure 2, and if so, to provide a connection for a communications link with the backbone ground station. In this manner the network services provided by the electronic device 10 can include services that are provided over the network backbone.

The constellation with earth observation (EO) operations and EO related applications can be self-standing or can be combined with a communications network (such as the above network, the ad-hoc networks as described below or with a separate satellite network) for transmission of data of the applications in (near) real time. Alternatively, collected data of applications, etc., can be stored in a memory in the electronic device 10 on-board the airplane during flight and subsequently downloaded after landing at an airport (via either wireless or wired connection).

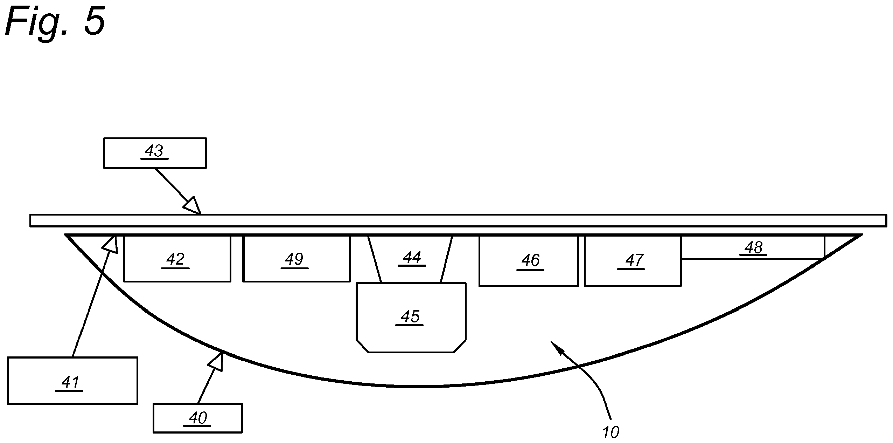

Figure 5 shows a schematic view of an exemplary embodiment of the electronic device 10, i.e. the payload to be carried by a number of airplanes to form the constellation as desired.

The electronic device 10 comprises a radome assembly having a radome 40, mounted on a radome base 41. The radome base 41 is attachable to the outer surface of the airplane 30 (host plane wall 43). The radome 40 is mountable on the radome base 41, which is designed to have generic interfaces for accepting the various equipment to be housed inside the radome assembly. The radome 40 is made of a material transparent to the wavelengths used for the intended applications (such as EO or AIS), as well as for the additional communications and localization functionality of the electronic device 10. In an embodiment a 'standardised' radome assembly 40, 41 is provided, compatible with several equipment units and corresponding applications. The size of the radome 40 fits inside an aerodynamic boundary layer of the airplane 30 in a further embodiment in order to minimise aerodynamic drag.

The radome assembly 40, 41 could be implemented using a standardized radome, for which the size and drag parameters are optimized for the present invention embodiments of the electronic (add-on) device 10. Commercial airplanes 30 are well suited to host Smallsat-like payloads (SLP) such as the electronic device 10, providing a stable environment and power supply. In fact, Cubesat size payloads of the order of 10 - 20kg mass would be perfectly compatible for installation on airplanes 30. The dimensions and structure for the present invention radome assembly 40, 41 could also be well like existing standards for installation of equipment on commercial airplanes, in particular for satellite terminals, for example the ARINC 791 standard, which establishes standard form, fit, and interfaces for an aviation wideband satcom system. For example the dimensions of the radome 40 in the standard ARINC 791 (having a swept volume of approximately 76 to 94 cm long and 25 to 30 cm high (30 to 37 inches long and 10 to 12 inches high)) can house several Cubesat standard units. This is feasible, taking into account the availability of small size equipment from recent Smallsat or other developments (such as for example miniature cameras, transponders, processors, planar antennas).

In the exemplary embodiment shown, a camera assembly 45 is provided as an implementation of the data collection sensor 45 to implement an earth observation function of the electronic device 10, but also alternative or additional earth observation sensor units 45 may be present, such as a radar imaging sensor, a synthetic aperture radar (SAR) imaging sensor or a Lidar sensor. The data collection sensor 45 is placed inside the radome assembly under the radome 40. The data collection sensor 45 may comprise one or more cameras for imaging/video applications. The data collection sensor 45 may be mounted on a steering mechanism (e.g. a gimbal) 44 or it may be fixed on the radome basis 41. The gimbal 44 may be used to orient the camera(s) 45 to geographical areas of interest. Several small size gimbals 44 are available in the market. In case the data collection sensor 45 is fixed, it may comprise several cameras in order to provide imaging in a large field of view. It may for example comprise side looking and down looking cameras or radars for optimal coverage. Several small size cameras are available in the market, developed for Smallsat, UAV or machine vision applications (some cm's and some 10ths of gram). Cameras are typically commercialised with processing software which can be used for image processing.

In case of radar applications, the sensor 45 includes radar antennas and equipment fixed or steerable (mechanically or electronically).

A processing module 42 is also shown as part of the exemplary embodiment of the electronic device 10 shown in Figure 5, and is arranged for processing and data handling. This processing module 42 may be arranged to store and/or process on board data/images received from the data collection sensor 45 (as well as from the navigation unit 47 (see below), and to further condition the data for transmission (for example making data compression, or apply error correction). The processing module 42 may for example store images/data for transmission after the airplane 30 is back on ground. The module 42 may perform image processing, including geometric corrections, radiometric corrections, image enhancement - including contrast modification or filtering.

The exemplary embodiment shown in Figure 5 further comprises an antenna 48. In an exemplary embodiment it is a low profile, or flat, antenna in order to fit in the radome 40. The antenna 48 is used for the communications, and possibly also for a navigation unit 47. If one antenna cannot handle both the communications and the navigation unit (e.g. GPS) frequency bands, then two antennas 48 placed inside the radome assembly 40, 41 may be used. Alternatively (an) antenna(s) external to the radome 40 may be used, for example (a) fin antenna(s). In the case of using optical links for the communications between the airplanes and the ground or the inter-plane links the antennas are replaced or augmented by e.g. laser communication units.

A navigation unit 47 is also placed inside the radome assembly 40, 41 to provide positioning information. The navigation unit 47 is e.g. a GPS/ inertial navigation module. Such equipment may already be found in the market with size of some 5cm and weight of some 50 grams. The navigation unit 47 is connected to the antenna 48 and the processing module 42.

A communication unit 46 is also be part of the electronic device 10. It is connected to the antenna 48 for transmitting or receiving signals. It is connected to the processing module 42 for receiving data to be transmitted or for providing control data to other parts of the electronic device 10. The communication unit 46 may transmit/receive data during the flight of the airplane 30 or it may only transmit/receive when the airplane 30 is on ground (for example via a mobile connection or via Wi-Fi or other wireless or wired connection at an airport). The communication unit 46 may further provide connectivity for telecommunication applications and/or for (near) real-time transmitting collected data and receiving instructions for the operation of the data collection sensor 45 (e.g. for zooming and/or gimbal orientation) and/or the operation of the other equipment in the electronic device 10. The communication unit 46 may be configured to communicate with the ground stations 20, 25 and/or the other airplanes 30 in the constellation via inter-plane links. It may be advantageous to use two communication units 46, one for connecting with the ground stations 20, 25 and one for the inter-plane links. A possible implementation would be to use miniature transponders (some cm in size and some 10ths of grams in mass) which are available already in the market for Smallsat or other applications. The associated antenna(s) will need to provide at least hemispherical coverage towards the ground or be steerable, in particular if optical links are used. Additionally or alternatively, the communication unit 46 may also be arranged for broadcasting a beacon signal, for example for activating the ground stations 20 on the ground when these are acting as machine-to-machine (M2M) terminals.

Alternatively the inter-plane or satellite networks may be used for this transmission. In particular, the electronic device 10 may be connected to a satellite terminal that may already be available on the plane by other operators and for other uses (several aviation companies have satellite terminals on their planes, for example for providing TV or internet to the passengers).

In an exemplary configuration, the data collection sensor 45 may comprise a panchromatic and an infrared camera assembly, or even a single thermal infrared imager, and may be used for a near real time (forest) fire detection application. The images from the cameras 45 and the data from the navigation module 47 are processed/combined for deriving the coordinates of hot spots in the field of view (i.e. suspect fire points). Subsequently only these coordinates are transmitted to a receiving ground station 25 via the communication module 46 and antenna 48. This reduces drastically the amount of data to be sent and therefore the required bandwidth, allowing for example Ultra Narrow Band communication techniques and reducing accordingly the cost of bandwidth. In a further embodiment, the communication unit 46 is arranged to use wireless communications in free to use parts of the spectrum, e.g. the ISM band (e.g. in a narrow frequency band around 850 MHz).

In an even further embodiment, the electronic device 10 may include an AIS (Automatic Identification System) receiver as implementation of the data collection sensor 45, e.g. for providing maritime services in the associated geographical coverage area. In a specific application, the constellation may be used for detecting oil spills etc. using camera based techniques, in combination with AIS techniques for identifying e.g. a ship after detection of an oil spill.

It will be clear to the person skilled in the art that the electronic device 10, for each envisaged application, will include corresponding equipment as necessary. Note that several different applications may be possible with equipment placed in a single electronic device 10, and operated by the same or different operators via the same or different control systems e.g. a telecommunication operator and an EO operator may use the same electronic device 10. In a further embodiment of the constellation, some airplanes 30 may be equipped with one type of electronic device 10 while other airplanes 30 may be equipped with a different type of electronic device 10, wherein the electronic devices 10 of different type may cooperate for improving the service. For example some airplanes 30 in the constellation may have cameras 45 for optical imaging, while some other airplanes 30 in the constellation may have radar imaging instruments 45. Another example is wherein some airplanes 30 have a single EO equipped electronic device 10, while others have an AIS equipped electronic device 10, and even further airplanes 30 have an electronic device 10 equipped with both EO and AIS types of data collection sensors 45.The inter-plane links and/or instructions from the operator via the communications unit 46 may be used for the optimal operation and coordination/collaboration of the electronic devices 10.

For simplicity, the cabling between the various units of the electronic device 10 is not shown in schematic view of Figure 5. Operating power for the electronic device 10 may be provided by the airplane 30 via appropriate connections e.g. via a power control unit (PCU) 49 being part of the electronic device 10, or it may be provided by a battery or other power generating system inside the radome assembly 40, 41 electronics. Additionally, the constellation of electronic devices 10 may be used to implement a communications network system. In such a communications network system 1 the electronic device 10 functions as a (mobile and airborne) 'base station, serving a plurality of user terminals 22 (client devices) within the associated geographical coverage area, i.e. the user terminal 22 may be seen as a special type of the ground station 20 shown in Figure 2. The electronic device 10, and each user terminal are also configured for wireless network communication by sending and receiving RF or optical signals. Access techniques include - but are not limited to - FDMA, TDMA, CDMA, etc... The term 'base station' is used here in a broad sense for a device that provides relaying of any type of communications, but also may provide a control of the flow of communication signals to and from user terminals in the range covered by the base station. A user terminal is defined here as any type of device capable of transmitting and/or receiving RF or optical signals for the purpose of wireless communication.

The electronic device 10 may be configured to transmit only (Tx) or to receive only (Rx) or to transmit and receive (Tx/Rx) for providing wireless network communication services to the user terminals 22.

The airplane 30 functions as a platform to carry the electronic device 10. The electronic device 10 activation and operation, which are performed under the control of a constellation operator depend on the operating conditions of the airplane 30 (flight path and schedule), but the operation of the airplane 30 is not at all affected by the presence of the electronic device 10. The constellation is operated autonomously by the constellation operator and the airplane operators are not involved.

The user terminals 22 are typically positioned at earth surface level below the airplane 30 in flight within its individual range of coverage which depends on the altitude of the airplane 30. As explained above, the individual range of coverage can be up to about 350 km when the airplane is at a cruise altitude of about 10km. The distance D between two user terminals 22 that are in communication via the electronic device 10 can be up to about 700 km. For example, an electronic device 10 on board of an airplane 30 flying over a relatively small country such as the Netherlands, or Belgium or a country of comparable or smaller size can substantially cover the full area of that country.

In a cooperation with other equally equipped airplanes 30 over the geographic area of coverage of interest, the electronic device 10 forms a node of a constellation with similar electronic devices 10. The electronic device 10 may be arranged to provide a beacon signal during flight. Such a beacon signal can be used as a presence signal by user terminals to activate and initiate communications over the wireless network set up by the electronic device 10, e.g. as a machine-to-machine (M2M) type of implementation. Access of a user terminal to the network provided by the electronic device 10 can be obtained by any procedure known in the art. In this respect it is observed that over many geographic locations such as Europe, parts of Asia, and parts of the Americas, the density of air traffic is sufficient to obtain adequate surface coverage which can compete with a coverage created by a constellation of a large number of satellites.

Figure 3 shows a schematic layout of a network for serving for the various applications of the invention embodiments as described above.

An airplane 30 equipped with an electronic device 10 in accordance with an embodiment of the invention passes over a geographical area which can basically be covered by a single electronic device 10. Given the position of the airplane 30, the electronic device 10 has an individual airplane coverage range below the airplane 30 as determined by equation 1 above. The electronic device 10 having communications capabilities can be arranged to provide coverage of the full area (wide angle communications) or parts of the area (communications with one or more spots within the area). In case the electronic device 10 has capabilities for communications applications, within the individual airplane coverage, user terminals 22 will be present that may use communication applications as provided by the electronic device 10. The user terminals 22 may be fixed or mobile. Here, the electronic device 10 acts as base station and provides network communication services to the user terminals 22. In this configuration the base station (electronic device) 10 allows communication between the user terminals 22. As the airplane 30 moves along its flight path, the individual airplane coverage will move accordingly. While the electronic device 10 acting as base station covers the predetermined geographical area it is within reach of the connected user terminals 22 and it can provide communications services. When however, the electronic device 10 acting as base station is no longer providing sufficient coverage of the geographical area, the constellation is configured to handover the network services to another electronic device 10 acting as base station that subsequently comes in sight of the geographical area. The other electronic device 10 acting as base station accepts the handover, then becomes an ad-hoc node of the network and replaces the previous electronic device 10 for providing the network communication services.

In particular, when the density of air traffic above a geographical area is high, coverage of that area can be maintained as long as airplanes equipped with the electronic device 10 acting as a base station fly over the geographical area in a range where the airplane is visible from the geographical area. Handover is defined here as the switching of the connection of the user terminal 22 from one electronic device 10 on one airplane 30 in the constellation to another electronic device 10 on another airplane 30 of the constellation.

The electronic device 10 acting as base station may monitor the signals from the user terminals 22 to detect when handover becomes necessary. Alternatively or additionally, the control unit of the service provider operating the constellation may provide indications or instructions to the base station to handover. Also the electronic device 10 may be configured with a capability to handover communication services or accept these services from a different electronic device 10. The constellation is provided with a control system that instructs electronic devices 10 to handover or to accept communication services from a different electronic device 10.

It will be appreciated that the operating frequencies of the electronic devices 10 are selected in order to avoid interferences when individual airplane coverages overlap.

In addition to the handover capabilities of the electronic device 10 acting as base station, user terminals 22 can be configured with additional functions to switch over to another electronic device 10 of the constellation acting as base station. When a given airplane 30 covering given user terminals 22 flies away and the given user terminals 22 are about to lose the contact with the electronic device 10 acting as base station, the user terminals 22 may select another electronic device 10 of the constellation, on another airplane 30 whose coverage range includes the given user terminals 22, i.e., is within the range of individual airplane coverage for these user terminals 22. Switching over occurs preferably before the contact with the electronic device 10 acting as base station is lost.

Therefore, over the time of the connection one or more electronic devices 10 of the constellation may be used as base station to provide communication services to user terminals 22 in a given geographical area. The operations of the network of Figure 3 are similar to the operations of a mobile telephony network, but here it is the base station (the electronic device 10) that is moving; the users (user terminals 22) are fixed or mobile within the individual airplane coverage range of the electronic device 10. In the same way that a mobile phone may use more than one base station over the duration of a call, a fixed or mobile user (terminal 22) may use more than one electronic device 10 during the duration of a communication link. The operations of the electronic devices 10 acting as moving base stations are controlled by a control ground station 25 as shown in Figure 3 located inside the geographical coverage of interest. For example one or more control ground stations 25 in the Netherlands may control the operations of electronic devices 10 of the constellation over the Netherlands. The control ground station 25 as shown in Figure 3 may also be arranged to act as the backbone ground station 25 as discussed above for providing connection to a backbone network such as the Internet.

In a further specific embodiment, the present invention is used as an implementation of a machine-to-machine (M2M) network. In an area that is covered by an electronic device 10 in flight that acts as base station, such a M2M network comprises user terminals 22 each having a terrestrial wireless communications terminal installed on a "machine". Such "machines" may broadly relate to any type of machine, industrial installations, various apparatus in houses or factories, infrastructural constructions or devices, containers and trucks or other vehicles, all equipped with an interface for monitoring and/or control (e.g. a monitor unit connected to a thermometer for monitoring the temperature in a refrigerated container).

It is noted that for all above types of networks and applications but in particular for M2M networks, the electronic device 10 acting as base station may be equipped with storage capacity for temporarily storing data received from and data to be transmitted to the user terminal 22. In particular when a network backbone connection (e.g. via control ground station 25 as shown in Figure 3) for transmission of the machine-related data is not present within the individual airplane coverage range of the electronic device 10 at a given moment, the electronic device 10 can use the storage capacity to keep data in memory until a network backbone equipped control ground station 25 has come "in sight" of the airplane 30 in order to have a delayed transmission of data (in either upstream or downstream or both upstream and downstream directions) and in a similar manner to communicate data from a network backbone to the user terminal 22 when the user terminal 22 has come within the individual airplane coverage range for wireless communications.

Figure 4 shows a schematic layout of an arrangement combining networks for various applications as described above with various communication network implementations. Here, the constellation provides a coverage of an aggregated area that comprises a plurality of networks set-up by electronic devices 10-12 onboard various airplanes 30-32 that fly along flight paths over the aggregated area.

A first electronic device 10 on a first airplane 30 is in communicative connection with at least one further electronic device 11, 12 on a further airplane 31, 32. This communicative connection may be via RF or optical means (e.g. using direct laser communication links). Hereinafter such a communicative connection is referred to as an inter-constellation communications link or inter-plane communications link. In the exemplary embodiment shown in Figure 4, a first electronic device 10 equipped on a first airplane 30 in flight is providing wireless network services to a first network 2A, while at least a second electronic device 11; 12 on a second airplane 31; 32 is providing wireless network services to a second network 2B; 2C. The first airplane 30 is at a position remote from the second airplane 31; 32, in a manner that the first and second networks 2A, 2B; 2A, 2C are not identical, although the first and second networks may partially overlap. The first and second electronic devices 10, 11; 10, 12 are arranged to have an inter-plane communication link 13; 14 , i.e., each of the electronic devices 10-12 is arranged to communicate with one or more other electronic devices 10-12 such that the two or more networks are linked together.

Advantageously, this inter-plane communication link 13; 14 allows provision of the capabilities and/or services available in each network 2A, 2B, 2C to the other network(s). In an example as shown in Figure 4, a first user terminal 24 in the network indicated as 2B wishes to communicate with a second user terminal 26 in the network indicated as 2C. The connection between the two specific user terminals 24, 26 is then established by a first link between the first user terminal 24 and the base station 11 in the airplane 31 that covers the geographical area of network 2B. Then a second link is established from the electronic device 11 in airplane 31 to the electronic device 10 on airplane 30 by means of the inter-plane communications link 13. A third link is established by means of the inter-plane communications link 14 from the electronic device 10 on airplane 30 to the electronic device 12 on the airplane 32 that covers the area where the second user terminal 26 is located. Finally, the electronic device 12 on the airplane 32 is in connection to the second user terminal 26 over a fourth link. The communication between the first user terminal and the second user terminal thus takes place over the path of the links as described above.

The situation that user terminals 24, 26 in different individual airplane coverage ranges can communicate over such a path of links occurs when the airplanes 30-32 that use one or more inter-plane communications links 13, 14 are within the maximal individual airplane coverage range (e.g., about 700 km at 10km altitude).

For example, by using the inter-plane communications links between the electronic devices on the airplanes 30, 31-32 each of the networks can use a backbone connection via a ground station 25 that is available only in one particular network and not in the other networks.

The one or more networks may be further linked to one or more communications satellites 15 via an RF or optical satellite terminal on the airplane 30-32 connected to the electronic device 10-12, or via an RF or optical satellite terminal included within the electronic device 10-12. The one or more communications satellites 15 are configured to provide the user terminals 20, 22 additional communication services over the satellite network. This arrangement may be advantageous for example in the case where the airplanes 31, 32 that cover the areas 2B, 2C in which the first and second user terminals are located, are not within the maximal line-of-sight range of each other. In this case, the communication link between the electronic devices 11, 12 on the two airplanes 31, 32 can be established by means of communication links via a satellite network that bridges the distance between the electronic devices 11, 12. In this case the airplanes electronic devices 11, 12 act as intermediate routers between the user terminals 20, 22 and the satellite network and, in view of the smaller attenuation due to the smaller distance between airplanes 30 and user terminals 20, 22 as compared to the distance between users in a regular satellite communication system smaller and less powerful terminals may be used by the users. This is in particular of advantage for mobile portable terminals where the size and weight need to be small. The satellite link can also provide connectivity to the user terminals 20, 22 to the backbone via a satellite ground station 25 within, or outside, the predetermined geographical area. For example the satellite link may connect the networks covering Europe to a satellite ground station in USA.

It is also possible to share communications traffic for one network between at least two electronic devices 10-12 on a same number of airplanes 30-32. In addition to the electronic devices 10-12, a control unit or coordinating unit 16 is provided that instructs the electronic devices 10-12 which one is selected to provide the coverage to selected users depending on traffic load, number of users, line of sight/blockage etc.

Such a control or coordinating unit 16 may be remote from the electronic device 10, be located in or being part of the ground control station 25, or located elsewhere and connected to the ground control station 25 over the network backbone, for controlling or coordinating by instructions transmitted to the electronic devices 10-12 involved. Alternatively, a control or coordinating unit 17 may be integrated in or locally coupled to the electronic device 10.

According to an embodiment, each electronic device 10 acting as base station is provided with similar control capabilities to handover its network services to another electronic device 10 that covers substantially the same area.

Such techniques where the signal from a user terminal 20, 22, located in the range of a given airplane 30 equipped with the electronic device 10, is transmitted via several connections to electronic devices 11, 12 on other airplanes 31, 32 in the constellation to another user terminal or user in the range of another electronic device equipped airplane, are similar to techniques used in satellite constellations where a user may be connected to other users or to a network backbone via several inter-satellite connections (this is for example done in the Iridium satellite constellation).

Also the network described with reference to Figure 4 can operate in a way similar to a vehicular ad hoc network (VANET). VANET's are developed typically to use communications devices in cars as mobile nodes to create a network; there is considerable know-how related to VANET's which may be applicable in the networks of Figure 4. A VANET turns every participating communications device in a car into a wireless node of the network.

In a similar manner an electronic device 10 on one airplane 30 can act as wireless node in a VANET created with other electronic devices 11, 12 from the constellation on other airplanes 31, 32.

As the electronic device 10 on a first airplane 30 falls out of the range of a second electronic device 11 on a second airplane 31 with which it was communicating, yet another (third) electronic device 12 on another airplane 32 of the constellation can join in, so that a mobile ad-hoc network is created between these electronic devices 10-12.

Since the airplanes 30-32 are moving along their flight paths, the coverage of the geographical area below the airplanes 30-32 by the on-board electronic devices 10-12 moves correspondingly, which causes that at the geographical area the communications link of user terminals to the electronic device 10 on the airplane "in visibility" is broken when the electronic device 10 is no longer visible (i.e., is out of the individual airplane coverage range). According to the invention, the constellation provides a dynamical coverage by using the availability of another airplane equipped with another electronic device 11, 12 that has a flight path in visibility of the geographical area. As mentioned above with reference to Figure 4, a handover of the communications link(s) between airplanes 30-32 that in subsequence pass the geographical area provides that the communications link of the user terminals can be maintained as long as airplanes 30-32 of the constellation are in "visible" range. For example, when the electronic device 11 covering the area of network 2B moves away, the area of the network 2B is about to lose the communications link with the electronic device 11. The control system of the constellation 16; 17 will instruct a handover of the communications link to an electronic device on-board of another airplane of the constellation that enters (becomes visible in) the particular area of the network. In this manner the communications link can be maintained. Similar handover operations will take place in other areas with networks, e.g., network 2A, 2C.

Alternatively or additionally, in a constellation, electronic devices 10-12 for earth observation applications on different airplanes 30-32 can be linked for communication between them over an inter-plane communications link to combine their capabilities within the constellation. Such a link can be used to transmit data between the electronic devices 10-12 for purpose of direct transmittal of collected data, data sharing, interoperability of the devices, handover procedure, etc.

It is noted that the capability to use inter-plane communications link 13, 14 may facilitate a direct communication of collected data in a (part of a) covered geographical area to stakeholders located at any location. In particular, for data relating to possible calamities, a direct transmittal is very desirable. For example, in network 2C earth observation data may be collected by the electronic device 12 having EO capabilities, but no network backbone ground station is available in that area. As already described above, the electronic device 12 of network 2C can communicate with a network backbone ground station 25 in network 2B by using one or more inter-plane communications links. After transmittal of the collected data to the network backbone ground station 25, the collected data can directly be transmitted further over the network backbone to the stakeholders for these data. In case of data that may require urgent processing such as data of forest fires observation, the data will typically be transmitted directly via the network backbone to a forestry department or a fire department.

The skilled in the art will appreciate that in an embodiment the constellation is provided with means to manage or provide routing facilities for transmission of data via inter-plane communications links to available network backbone connections in the constellation. Also, the constellation may comprise a combination of earth observation related electronic devices and communications related electronic devices. According to an embodiment, an airplane may carry either one or more earth observation related electronic devices or one or more communications related electronic devices or both.

The foregoing descriptions of embodiments of the present invention have been presented for purposes of illustration and description only. They are not intended to be exhaustive or to limit the present invention to the disclosed embodiments. Other alternatives and equivalent embodiments of the present invention are conceivable within the idea of the invention, as will be clear to the person skilled in the art. The scope of the invention is limited only by the appended claims.

**Claims**

1. A method of creating a constellation of electronic devices (10) for providing optical or radio-frequency operations relating to earth surface data collection applications on a predetermined geographical area, comprising:

- providing on each of a plurality of airplanes (30) at least one electronic device (10) from the constellation, the at least one electronic device (10) being a unit attached to the associated airplane (30) and comprising a data collection sensor (45), during its flight each airplane (30) having a flight path over at least a portion of said predetermined geographical area, each electronic device (10) being configured for said operations during the flight with an earth coverage range for said operations determined by an individual airplane coverage range of a portion of the earth surface as provided by the associated airplane (30);
- activating one or more electronic devices (10) for said operations when the individual airplane coverage of the one or more airplanes (30) associated with the one or more electronic devices (10) is within the predetermined geographical area,

wherein the data collection sensor (45) comprises a passive or an active data collection sensor (45) arranged to detect signals from the earth surface during operation.

2. The method according to claim 1, wherein the airplane is a commercial passenger airplane or a commercial cargo airplane operating in accordance with its flight path and schedule

3. The method according to claim 1 or 2, wherein the optical or radio-frequency operations relating to earth surface data collection applications comprises earth observation applications and/or automated identification system (AIS) applications.

4. The method according to any one of claims 1-3, wherein the activation of each electronic device (10) of the constellation is controlled by deriving for each respective electronic device (10) its position in said predetermined geographical area in such a way that the earth coverage ranges for said operations of the activated electronic devices (10) substantially cover the predetermined geographical area for a predetermined duration of time.

5. The method according to any one of claims 1 - 4, wherein the method further comprises establishing a communications link between the electronic device (10) and a ground station (25) connected to a network backbone within the earth coverage range of the electronic device (10).

6. The method according to any one of claims 1 - 5, further comprising establishing an inter-constellation communications link (13, 14) between one electronic device (10) onboard one airplane (30) from the plurality of airplanes and another electronic device (11, 12) onboard another airplane (31-32) of said plurality of airplanes.

7. The method according to claim 6, wherein said inter-constellation communications link (13, 14) is an inter-plane communications link in which the one and other airplanes (30-32) are within the line-of-sight of each other, such as an RF or optical communication link, and/or a satellite communications link in case there is no line of sight.

8. The method according to any one of claims 1 - 4, wherein the method further comprises collection of data during said operations of the electronic device (10) when in flight, and uploading said collected data to a predetermined network location via an earth based communication link provided after landing of the airplane (30).

9. A system of a constellation of electronic devices (10) for providing optical or radio-frequency operations relating to earth surface data collection applications on a predetermined geographical area of at least a portion of the earth surface, each electronic device (10) being arranged for providing optical or radio-frequency operations relating to earth surface data collection applications on a predetermined geographical area of at least a portion of the earth surface, the electronic device (10) being a unit attachable to an associated airplane (30) and comprising a data collection sensor (45),
each electronic device further comprising a radome assembly (40, 41) with a radome (40) mounted to a radome base (41), the radome base (41) being attachable to the associated airplane (30), and the data collection sensor (45) comprising a passive or an active data collection sensor (45) arranged to detect signals from the earth surface during operation.

10. The system according to claim 9, wherein the data collection sensor (45) comprises one or more of: a camera for imaging or video applications, an infrared camera, a radar imaging unit, a synthetic aperture radar unit, a lidar unit, an automated identification system (AIS) unit.

11. The system according to claim 9 or 10, the system being further arranged to execute the method according to any one of claims 1-8.

12. The system according to claim 11, further comprising a control station (16, 17), and wherein the electronic device (10) comprises a communications unit (46) arranged to provide exchange of control data with the control station (16, 17).

13. The system according to claim 11 or 12, further comprising a ground station (20), and wherein the electronic device (10) comprises a communications unit (46) arranged to provide exchange of data with the ground station (20).

14. The system according to claim 12 or 13, wherein the communications unit (46) of the electronic device (10) is arranged to provide data communications with a further electronic device (10).

15. The system according to any one of claims 12-14, wherein the control station (16, 17) is arranged to control activation of one or more electronic devices (10) for said operations when the individual airplane coverage of the one or more airplanes (30) associated with the one or more electronic devices (10) is within the predetermined geographical area.

**Patentansprüche**

1. Verfahren zum Erzeugen einer Konstellation von elektronischen Vorrichtungen (10) zum Bereitstellen von optischen oder Funkfrequenzoperationen in Bezug auf Erdoberflächen-Datensammelanwendungen in einem vorbestimmten geografischen Gebiet, umfassend:

    - Bereitstellen von mindestens einer elektronischen Vorrichtung (10) aus jeder Konstellation auf jedem einer Vielzahl von Flugzeugen (30), wobei die mindestens eine elektronische Vorrichtung (10) eine an dem zugehörigen Flugzeug (30) angebrachte Einheit ist und einen Datensammelsensor (45) umfasst, wobei jedes Flugzeug (30) während seines Fluges einen Flugweg über mindestens einen Teil des vorbestimmten geografischen Gebiets aufweist, jede elektronische Vorrichtung (10) für die Operationen während des Fluges mit einem Erdabdeckungsbereich für die ermittelten Operationen konfiguriert ist, die durch einen individuellen Flugzeugabdeckungsbereich eines Teils der Erdoberfläche bestimmt sind, wie er durch das zugehörige Flugzeug (30) bereitgestellt wird;
    - Aktivieren einer oder mehrerer elektronischer Vorrichtungen (10) für diese Operationen, wenn die individuelle Flugzeugabdeckung des einen oder der mehreren Flugzeuge (30), die mit dem einen oder den mehreren elektronischen Vorrichtungen (10) assoziiert sind, innerhalb des vorbestimmten geografischen Gebiets liegt,

wobei der Datensammelsensor (45) einen passiven oder einen aktiven Datensammelsensor (45) umfasst, der dazu eingerichtet ist, Signale von der Erdoberfläche während des Betriebs zu erfassen.

2. Verfahren nach Anspruch 1, bei dem das Flugzeug ein kommerzielles Passagierflugzeug oder ein kommerzielles Frachtflugzeug ist, das gemäß seiner Flugbahn und seines Flugplans arbeitet.

3. Verfahren nach Anspruch 1 oder 2, bei dem die optischen oder Funkfrequenzoperationen, die sich auf Erdoberflächen-Datensammelanwendungen beziehen, Erdbeobachtungsanwendungen und/oder automatisierte Identifikationssystem- (AIS-) Anwendungen umfassen.

4. Verfahren nach einem der Ansprüche 1 bis 3, bei dem die Aktivierung jeder elektronischen Vorrichtung (10) der Konstellation gesteuert wird, indem für jede entsprechende elektronische Vorrichtung (10) ihre Position in dem vorbestimmten geographischen Bereich derart abgeleitet wird, dass die Erdabdeckungsbereiche für die genannten Operationen der aktivierten elektronischen Vorrichtungen (10) im Wesentlichen das vorbestimmten geographischen Gebiet für eine vorbestimmte Zeitdauer abdecken.

5. Verfahren nach einem der Ansprüche 1 bis 4, wobei das Verfahren weiterhin das Herstellen einer Kommunikationsverbindung zwischen der elektronischen Vorrichtung (10) und einer Bodenstation (25) umfasst, die mit einem Netzwerk-Backbone innerhalb des Erdabdeckungsbereiches der elektronischen Vorrichtung (10) verbunden ist.

6. Verfahren nach einem der Ansprüche 1 bis 5, weiterhin umfassend das Herstellen einer Interkonstellations-Kommunikationsverbindung (13, 14) zwischen einer elektronischen Vorrichtung (10) an Bord eines Flugzeugs (30) aus der Vielzahl von Flugzeugen und einer anderen elektronischen Vorrichtung (11, 12) an Bord eines anderen Flugzeugs (31-32) der Vielzahl von Flugzeugen.

7. Verfahren nach Anspruch 6, bei dem die Interkonstellations-Kommunikationsverbindung (13, 14) eine Inter-Flugzeug-Kommunikationsverbindung ist, bei der sich das eine und die anderen Flugzeuge (30 - 32) innerhalb der Sichtlinie zueinander befinden, wie etwa eine HF- oder optische Kommunikationsverbindung und/oder eine Satellitenkommunikationsverbindung, falls keine Sichtverbindung besteht.

8. Verfahren nach einem der Ansprüche 1 bis 4, wobei das Verfahren weiterhin das Sammeln von Daten während der Operationen der elektronischen Vorrichtung (10) während des Fluges und das Hochladen der gesammelten Daten an einen vorbestimmten Netzwerkort über eine erdbasierte Kommunikationsverbindung umfasst, die nach der Landung des Flugzeugs (30) bereitgestellt wird.

9. System einer Konstellation von elektronischen Vorrichtungen (10) zum Bereitstellen von optischen oder Funkfrequenzoperationen in Bezug auf Erdoberflächen-Datensammelanwendungen in einem vorbestimmten geografischen Gebiet von mindestens einem Teil der Erdoberfläche, wobei jede elektronische Vorrichtung (10) zur Bereitstellung von optischen oder Funkfrequenzoperationen in Bezug auf Erdoberflächen-Datensammelanwendungen in einem vorbestimmten geografischen Gebiet von mindestens einem Teil der Erdoberfläche eingerichtet ist, die elektronische Vorrichtung (10) eine Einheit ist, die an einem zugehörigen Flugzeug (30) anbringbar ist und einen Datensammelsensor (45) umfasst, und

jede elektronische Vorrichtung weiterhin eine Radom-Anordnung (40, 41) mit einem an einer Radom-Basis (41) angebrachten Radom (40) umfasst, wobei die Radom-Basis (41) an dem zugehörigen Flugzeug (30) anbringbar ist, und der Datensammelsensor (45) einen passiven oder einen aktiven Datensammelsensor (45) umfasst, der dazu eingerichtet ist, während des Betriebs Signale von der Erdoberfläche zu erfassen.

10. System nach Anspruch 9, bei der der Datensammelsensor (45) eines oder mehrere umfasst von: einer Kamera für Bilderzeugungs- oder Videoanwendungen, einer Infrarotkamera, einer Radarabbildungseinheit, einer Radareinheit mit synthetischer Apertur, einer Lidareinheit, einer automatischen Identifikationssystemeinheit (AIS).

11. System nach Anspruch 9 oder 10, wobei das System weiterhin dazu eingerichtet ist, das Verfahren nach einem der Ansprüche 1 bis 8 auszuführen.

12. System nach Anspruch 11, weiterhin umfassend eine Steuerstation (16, 17), wobei die elektronische Vorrichtung (10) eine Kommunikationseinheit (46) umfasst, die dazu eingerichtet ist, für einen Austausch von Steuerdaten mit der Steuerstation (16, 17) zu sorgen.

13. System nach Anspruch 11 oder 12, weiterhin umfassend eine Bodenstation (20), wobei die elektronische Vorrichtung (10) eine Kommunikationseinheit (46) umfasst, die eingerichtet ist, um einen Austausch von Daten mit der Bodenstation (20) bereitzustellen.

14. System nach Anspruch 12 oder 13, bei dem die Kommunikationseinheit (46) der elektronischen Vorrichtung (10) eingerichtet ist, für Datenkommunikationen mit einer weiteren elektronischen Vorrichtung (10) zu sorgen.

**15.** System nach einem der Ansprüche 12 bis 14, bei dem die Steuerstation (16, 17) dazu eingerichtet ist, die Aktivierung von einer oder mehreren elektronischen Vorrichtungen (10) für die Operationen zu steuern, wenn sich die einzelne Flugzeugabdeckung des einen oder der mehreren Flugzeuge (30), die zu der einen oder den mehreren elektronischen Vorrichtungen (10) gehören, innerhalb des vorbestimmten geografischen Gebiets befinden.

**Revendications**

**1.** Méthode de création d'une constellation de dispositifs électroniques (10) pour fournir des opérations optiques ou radiofréquences relatives à des applications de collecte de données de surface terrestre sur une zone géographique prédéterminée, comprenant de :

- fournir sur chacun d'une pluralité d'avions (30) au moins un dispositif électronique (10) de la constellation, le au moins un dispositif électronique (10) étant une unité attachée à l'avion associé (30) et comprenant un capteur de collecte de données (45), pendant son vol chaque avion (30) ayant une trajectoire de vol sur au moins une partie de ladite zone géographique prédéterminée, chaque dispositif électronique (10) étant configuré pour lesdites opérations pendant le vol avec une plage de couverture terrestre pour lesdites opérations déterminée par une plage de couverture d'avion individuelle d'une partie de la surface terrestre comme fournie par l'avion associé (30) ;
- activer un ou plusieurs dispositifs électroniques (10) pour lesdites opérations lorsque la couverture d'avion individuelle des un ou plusieurs avions (30) associés aux un ou plusieurs dispositifs électroniques (10) se situe dans la zone géographique prédéterminée,

dans laquelle le capteur de collecte de données (45) comprend un capteur de collecte de données passif ou actif (45) conçu pour détecter des signaux provenant de la surface terrestre pendant l'opération.

**2.** Méthode selon la revendication 1, dans laquelle l'avion est un avion de passagers commercial ou un avion-cargo commercial fonctionnant conformément à sa trajectoire et son plan de vol.

**3.** Méthode selon la revendication 1 ou 2, dans laquelle les opérations optiques ou radiofréquences relatives à des applications de collecte de données de surface terrestre comprennent des applications d'observation terrestre et/ou des applications de système d'identification automatisé (AIS).

**4.** Méthode selon l'une quelconque des revendications 1 à 3, dans laquelle l'activation de chaque dispositif électronique (10) de la constellation est commandée en dérivant pour chaque dispositif électronique respectif (10) sa position dans ladite zone géographique prédéterminée de manière à ce que les plages de couverture terrestre pour lesdites opérations des dispositifs électroniques activés (10) couvrent sensiblement la zone géographique prédéterminée pendant une durée prédéterminée.

**5.** Méthode selon l'une quelconque des revendications 1 à 4, dans laquelle la méthode comprend en outre l'établissement d'une liaison de communications entre le dispositif électronique (10) et une station au sol (25) connectée à un réseau fédérateur dans la plage de couverture terrestre du dispositif électronique (10).

**6.** Méthode selon l'une quelconque des revendications 1 à 5, comprenant en outre l'établissement d'une liaison de communications inter-constellation (13, 14) entre un dispositif électronique (10) embarqué à bord d'un premier avion (30) de la pluralité d'avions et un autre dispositif électronique (11, 12) embarqué à bord d'un autre avion (31-32) de ladite pluralité d'avions.

**7.** Méthode selon la revendication 6, dans laquelle ladite liaison de communications inter-constellation (13, 14) est une liaison de communications inter-avion dans laquelle le premier et l'autre avions (30-32) sont dans la ligne de visée l'un de l'autre, telle qu'une liaison de communication RF ou optique, et/ou une liaison de communications par satellite dans le cas où il n'y a pas de ligne de visée.

**8.** Méthode selon l'une quelconque des revendications 1 à 4, dans laquelle la méthode comprend en outre la collecte de données pendant lesdites opérations du dispositif électronique (10) en vol, et le téléchargement desdites données collectées vers un emplacement de réseau prédéterminé via une liaison de communication de type terrestre fourni après l'atterrissage de l'avion (30).

**9.** Système d'une constellation de dispositifs électroniques (10) pour effectuer des opérations optiques ou radiofréquences relatives à des applications de collecte de données de surface terrestre sur une zone géographique prédéterminée d'au moins une partie de la surface terrestre, chaque dispositif électronique (10) étant conçu pour fournir des opérations optiques ou radiofréquences relatives à des applications de collecte de données de surface terrestre sur une zone géographique prédéterminée d'au moins une partie de la surface terrestre, le dispositif électronique (10) étant une unité pouvant être attachée à un avion associé (30) et comprenant un capteur de collecte de données (45),

chaque dispositif électronique comprenant en outre un ensemble de radôme (40, 41) ayant un radôme (40) monté sur une base de radôme (41), la base de radôme (41) pouvant être attachée à l'avion associé (30), et le capteur de collecte de données (45) comprenant un capteur de collecte de données passif ou actif (45) conçu pour détecter des signaux provenant de la surface terrestre pendant l'opération.

10. Système selon la revendication 9, dans lequel le capteur de collecte de données (45) comprend une ou plusieurs parmi : une caméra pour des applications d'imagerie ou vidéo, une caméra infrarouge, une unité d'imagerie radar, une unité de radar à synthèse d'ouverture, une unité de lidar, une unité de système d'identification automatisé (AIS).

11. Système selon la revendication 9 ou 10, le système étant en outre conçu pour exécuter la méthode selon l'une quelconque des revendications 1 à 8.

12. Système selon la revendication 11, comprenant en outre une station de commande (16, 17), et dans lequel le dispositif électronique (10) comprend une unité de communications (46) conçue pour fournir un échange de données de commande avec la station de commande (16, 17).

13. Système selon la revendication 11 ou 12, comprenant en outre une station au sol (20), et dans lequel le dispositif électronique (10) comprend une unité de communications (46) conçue pour fournir un échange de données avec la station au sol (20).

14. Système selon la revendication 12 ou 13, dans lequel l'unité de communications (46) du dispositif électronique (10) est conçue pour fournir des communications de données à un autre dispositif électronique (10).

15. Système selon l'une quelconque des revendications 12 à 14, dans lequel la station de commande (16, 17) est conçue pour commander l'activation d'un ou plusieurs dispositifs électroniques (10) pour lesdites opérations lorsque la couverture individuelle d'avion des un ou plusieurs avions (30) associés aux un ou plusieurs dispositifs électroniques (10) se trouve dans la zone géographique prédéterminée.

Fig. 1

Fig. 2

EP 3 257 168 B1

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8897770 B
- WO 2009060139 A
- US 6285878 A
- US 20040198346 A
- US 20090221285 A